# EUROPÄISCHE PATENTSCHRIFT

(11) **EP 0 400 201 B1**
(45) Veröffentlichungstag und Bekanntmachung des Hinweises auf die Patenterteilung: **07.01.1993**
(21) Anmeldenummer: 89116593.8
(22) Anmeldetag: 08.09.1989
(51) Int. Cl.: A23G 3/02

(54) **Verfahren zur satzweisen Herstellung einer belüfteten Süsswarenmasse aus einer Zuckerlösung und einer Aufschlagmittellösung**
Process for making aerated confectionary from a sugar solution and a foaming agent solution in stages
Procédé de fabrication par étape de confiserie aérée à partir d'une solution de sucre et d'une solution d'agent de fouettage

(30) Priorität: 02.06.1989 DE 3918051
(43) Veröffentlichungstag der Anmeldung: 05.12.1990
(73) Patentinhaber: Klöckner Hänsel GmbH, 30024 Hannover (DE)
(72) Erfinder: Mergelsberg, R., D-3008 Garbsen 8 - Frielingen (DE)
(74) Vertreter: Rehberg, Elmar, Dipl.-Ing.

(56) Entgegenhaltungen:
- DE-A- 508 033
- FR-A- 1 372 934
- FR-A- 2 522 936
- GB-A- 2 111 367
- GB-A- 2 178 639
- NL-A- 7 106 986
- US-A- 2 753 158
- US-A- 2 901 988
- US-A- 3 520 698
- US-A- 4 470 998
- PH. BRYSELBOUT et al.: "Guide Technologique de la Confiserie Industrielle", Band 1, 8. März 1985

## Beschreibung

Die Erfindung bezieht sich auf ein Verfahren zur satzweisen Herstellung einer belüfteten Süßwarenschaummasse aus einer Zuckerlösung und einer Aufschlagmittellösung und mit einem Kocher und einer Aufschlagmaschine, indem die Zuckerlösung in dem Kocher gekocht, in die Aufschlagmaschine überführt, aus Aufschlagmittel und gekochter Zuckerlösung die belüftete Süßwarenschaummasse gebildet und unter Überdruckanwendung aus der Aufschlagmaschine herausgefördert wird. Unter einer Zuckerlösung wird eine Lösung von Zucker, Glucosesirup und sonstigen Einsatzstoffen in Wasser verstanden. Auch zuckerfreie Einsatzstoffe können als Zuckerlösung Verwendung finden. Eine Aufschlagmittellösung ist ebenfalls eine Lösung in Wasser, wobei als Aufschlagmittel Hühnereiweiß, Gelatine und sonstige Aufschlagmittel eingesetzt werden. In der Aufschlagmittellösung kann auch noch ein Anteil Zuckerlösung o. dgl. enthalten sein. Ebenso ist es möglich, daß Farben, Aromen o. dgl. in der Aufschlagmittellösung Verwendung finden.

Ein Verfahren der eingangs beschriebenen Art ist aus der DE-PS 35 28 637 bekannt. Dabei kann bereits das Kochen unter Anwesenheit von Normaldruck im Kocher erfolgen, weil die Unterdruckbehandlung in der Aufschlagmaschine durchgeführt wird. Die unter Normaldruck gekochte Zuckerlösung wird in die Aufschlagmaschine überführt und unter Unterdruck gesetzt, so daß die Zuckerlösung auf den erforderlichen Restwassergehalt und die gewünschte Weiterverarbeitungstemperatur gebracht wird. Nach Beseitigung des Unterdrucks wird die Aufschlagmittellösung der Zuckerlösung in der Aufschlagmaschine hinzugefügt. Das Aufschlagen dieser beiden zusammengebrachten Massen geschieht dann unter Normaldruck oder unter Überdruck. Vorzugsweise wird beim Aufschlagen Überdruck angewendet, um möglichst viel Luft zur Verfügung zu haben, die während des Aufschlagvorgangs in die sich bildende Süßwarenschaummasse eingearbeitet werden kann. Die Anwendung des Überdrucks während des Aufschlagens zielt auch auf die nachfolgende Expansion der Masse beim Herausführen aus der Aufschlagmaschine hin, um Süßwarenschaummasse mit niedrigem spezifischen Gewicht zu erzeugen. Es versteht sich, daß sich die einzelnen eingearbeiteten Luftblasen bei der Expansion entsprechend dem Druckgefälle vergrößern. Nachteilig ist an dieser Arbeitsweise, daß die Aufschlagmittellösung vor dem Aufschlagen mit der heißen Zuckerlösung in Kontakt kommt und durch vorzeitige Koagulation zur Schaumbildung teilweise nicht mehr beitragen kann. Die Schaumbildungsfähigkeit der Aufschlagmittellösung wird damit nur teilweise ausgenutzt.

Es ist weiterhin im Stand der Technik bekannt, aus einer Aufschlagmittellösung in einer Aufschlagmaschine ohne Anwesenheit der Zuckerlösung einen Vorschaum zu bilden. Das Aufschlagen der Aufschlagmittellösung erfolgt dabei üblicherweise unter Normaldruck. Das Kochen der Zuckerlösung im Kocher kann unter Normaldruck, unter Überdruck oder Unterdruck erfolgen. Die gekochte Zuckerlösung wird dann in der Aufschlagmaschine dem Vorschaum hinzugefügt, was zweckmäßig auch unter Normaldruck erfolgt. Anschließend wird der Vorschaum und die Zuckerlösung nochmals gemeinsam vermischt und aufgeschlagen, wobei dabei vielfach ein Überdruck Anwendung findet, der auf ausreichende Anwesenheit von Luft während des Aufschlagvorgangs, auf Expansion beim Austragen der Süßwarenschaummasse aus der Aufschlagmaschine und auf das damit verbundende niedrige spezifische Gewicht der Süßwarenschaummasse hinzielt. Eine möglicherweise wünschenswerte Unterdruckbehandlung der Süßwarenschaummasse nach dem Aufschlagvorgang, die sinnvollerweise zu einer Erniedrigung des Restfeuchtegehalts führen könnte, ist nicht möglich, weil durch die sich dann in dem Innenraum der Aufschlagmaschine einstellende Expansion der Süßwarenschaummasse zumindest ein Teil dieser Masse in die Leitung und den Unterdruckerzeuger hineingelangen würde.

Bei allen bekannten Verfahren zur Herstellung belüfteter Süßwarenschaummassen besitzen die in die Masse eingearbeiteten Blasen, die mit Gas, vorzugsweise Luft, gefüllt sind, eine bestimmte Größe, die für manche Anwendungsfälle als zu groß empfunden wird. Insbesondere, wenn die Entspannung der belüfteten Süßwarenschaummasse aus dem Überdruck in Normaldruck ausgenutzt wird, zielt dies nur noch auf eine Vergrößerung des Volumens jeder einzelnen Luftblase.

Der Erfindung liegt die Aufgabe zugrunde, ein Verfahren der eingangs beschriebenen Art zur satzweisen Herstellung belüfteter Süßwarenschaummassen aufzuzeigen, mit welchem es möglich ist, eine große Anzahl möglichst kleinvolumiger Blasen in der Süßwarenschaummasse zu erzeugen. Dabei kommt es in erster Linie auf die Kleinheit der erzeugten einzelnen Blasen an und nicht so sehr auf ein geringes, zu erzielendes spezifisches Gewicht.

Erfindungsgemäß wird dies dadurch erreicht, daß die Aufschlagmittellösung allein oder zusammen mit der gekochten Zuckerlösung unter Unterdruck aufgeschlagen wird. Die Erfindung geht von der Erkenntnis aus, daß der Aufschlagvorgang vorteilhaft unter Unterdruck durchgeführt werden kann, weil die Größe der nach dem Aufschlagvorgang vorliegenden Blasen weitgehend unabhängig davon ist, ob das Aufschlagen unter Überdruck, Normaldruck oder Unterdruck erfolgt. Wenn jedoch unter Unterdruck aufgeschlagen wird, entsteht letztlich bei Überführung der Süßwarenschaummasse in die Atmosphäre und damit in eine Umgebung mit Normaldruck eine negative Druckstufe, so daß die einzelnen Blasen kontrahieren bzw. zusammengedrückt werden. Das Volumen der einzelnen Blasen wird damit kleiner. An sich hielt es die Fachwelt bisher immer für erforderlich, den Aufschlagvorgang zumindest bei Normaldruck, vorzugsweise jedoch bei Überdruck, durchzuführen, um auf jeden Fall ausreichend Luft oder Gas zur Verfügung zu haben, welches in die Masse eingearbeitet werden konnte. Es erscheint deshalb im Gegensatz zu dieser Fachmeinung zunächst unsinnig, die Luft durch Anwendung des Unterdrucks vor dem Aufschlagvorgang teilweise wegzunehmen, so daß während des Aufschlagvorgangs Unterdruck vorliegt. Setzt man sich jedoch in Gegensatz zu der vorgezeigten Entwicklungsrichtung des Stands der Technik und wendet tatsächlich Unterdruck während des Aufschlagens an, dann ergibt sich als weiterer unerwarteter Vorteil die Möglichkeit, bei unverändertem maschinellen Aufwand eine Unterdruckbehandlung im Anschluß an den Aufschlagvorgang anzufügen, um den Restfeuchtigkeitsgehalt der Süßwarenschaummasse weiter zu erniedrigen. Bei manchen Produkten ist eine solche Restwasserreduzierung unbedingt erforderlich. Bei dem erfindungsgemäßen Verfahren geschieht durch den Übergang auf eine solche Unterdruckbehandlung keine unerwünschte Expansion der Masse in der Aufschlagmaschine, da die Masse während des Aufschlagens bereits ebenfalls unter Unterdruck ist und sich insoweit die Druckverhältnisse nicht wesentlich ändern.

Der Aufschlagvorgang unter Unterdruck kann einmal an der Aufschlagmittellösung allein erfolgen. Andererseits ist es aber auch möglich, die Aufschlagmittellösung und die gekochte Zuckerlösung nach ihrer Zusammenbringung gemeinsam unter Unterdruck aufzuschlagen. Im ersteren Fall erfolgt das Aufschlagen der Aufschlagmittellösung allein unter Unterdruck zu einem Vorschaum, dem die gekochte Zuckerlösung in der Aufschlagmaschine dann hinzugefügt wird; Vorschaum und Zuckerlösung werden dann zu der belüfteten Süßwarenschaummasse vermischt. Diese Verfahrensführung hat den Vorteil, daß das Aufschlagmittel in seiner Schaumbildungsfähigkeit möglichst optimal ausgenutzt wird. Verbrennungserscheinungen werden vermieden und es tritt letztendlich damit auch eine Einsparung an Aufschlagmittel ein. Das Vermischen von Vorschaum und Zuckerlösung zu der belüfteten Süßwarenschaummasse kann an sich unter Unterdruck, Normaldruck oder auch Überdruck durchgeführt werden. Wenn dies unter Überdruck erfolgt, wird bereits zu diesem Zeitpunkt die Kontraktion der gebildeten Blasen durchgeführt und der Überdruck lediglich zum Herausführen der belüfteten Süßwarenschaummasse aus der Aufschlagmaschine ausgenutzt. Dies ist in all jenen Fällen sinnvoll, bei denen der Restfeuchtigkeitsgehalt nicht weiter erniedrigt werden muß. Es ist aber auch möglich, die Vermischung des Vorschaums mit der gekochten Zuckerlösung unter Unterdruck durchzuführen und anschließend eine Unterdruckbehandlung der belüfteten Süßwarenschaummasse zur Feuchtigkeitsreduzierung anzuschließen, um besonderen Anwendungsfällen gerecht zu werden, wie sie beispielsweise bei hartem Nougat erwünscht sind.

Es ist aber auch möglich, die Aufschlagmittellösung und die gekochte Zuckerlösung zusammen unter Unterdruck zu der belüfteten Süßwarenschaummasse aufzuschlagen und anschließend eine Unterdruckbehandlung zur Feuchtigkeitsreduzierung der belüfteten Süßwarenschaummasse anzuschließen. Dabei ändert sich der Druckbereich nicht.

Es ist weiterhin möglich, die Zuckerlösung bereits im Kocher unter Unterdruck zu kochen, um bei der Überführung der Zuckerlösung in die Aufschlagmaschine den gleichen Druckbereich auch in der Aufschlagmaschine, nämlich Unterdruck, zu haben.

Die an den Aufschlagvorgang anschließende Unterdruckbehandlung erfolgt zweckmäßig unter Wärmezufuhr, was beispielsweise durch einen doppelwandig ausgebildeten Wandungsbereich der Aufschlagmaschine erzielt werden kann. Damit ist auch eine Temperaturbeeinflussung der Süßwarenschaummasse zu diesem Verfahrenszeitpunkt möglich.

Die sich an den Aufschlagvorgang unter Unterdruck anschließende Unterdruckbehandlung kann auch auf einem anderen Druckniveau als beim Aufschlagen unter Unterdruck erfolgen. Insbesondere ist es möglich, die Unterdruckbehandlung unter einem geringeren, absoluten Restdruck als den Aufschlagvorgang durchzuführen, um so auch geringe Restwassergehalte zu erreichen.

Mit dem neuen Verfahren ist es möglich, wesentlich kleinere Blasen in der Süßwarenschaummasse zu erzeugen als bisher. Im Vergleich zu einem Druckaufschlagen unter einem Überdruck von beispielsweise 3 bar reduziert sich das Volumen der einzelnen Luftblasen bei Anwendung eines Unterdrucks von 0,5 bar während des Aufschlagvorgangs in einem Verhältnis von etwa 1:6. Damit wird eine ganz andere Größenordnung der Feinheit der Luftblasen erzeugt, so daß bei manchen Anwendungsfällen die Möglichkeit eröffnet wird, ganz neue oder neuartige Produkte herzustellen. Ein weiterer wesentlicher Vorteil des neuen Verfahrens liegt darin, daß bisher bekannte maschinelle Vorrichtungen zur Durchführung des Verfahrens ohne oder jedenfalls ohne nennenswerten Umbau eingesetzt werden können. Es muß dafür Sorge getragen werden, daß das neue Verfahren in seinem zeitlichen Ablauf entsprechend gesteuert bzw. durchgeführt wird. So ist beispielsweise die aus der DE-PS 35 28 637 bekannte Vorrichtung zur Durchführung des neuen Verfahrens geeignet.

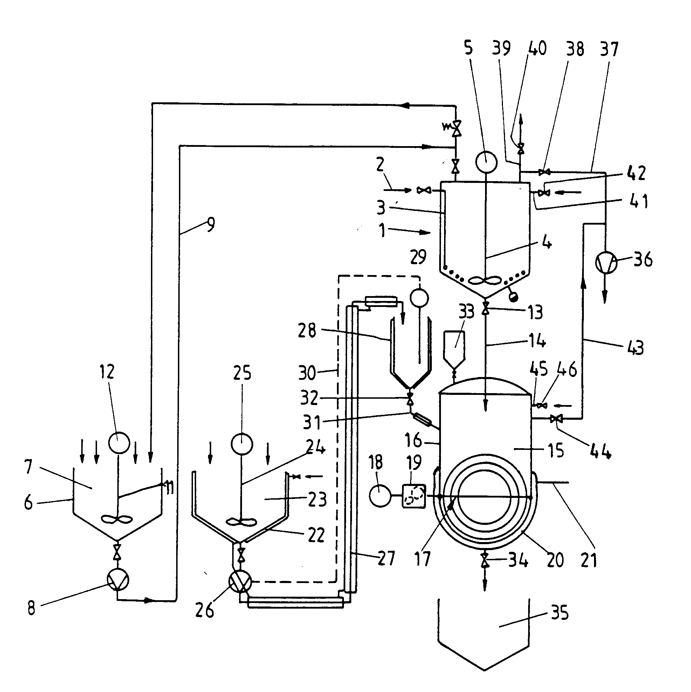

Die Erfindung wird anhand eines bevorzugten Ausführungsbeispiels weiter erläutert und verdeutlicht. In der Zeichnung ist eine Anlage dargestellt, die zur Durchführung des Verfahrens geeignet ist. Es ist ein Kocher 1 vorgesehen, der mit Dampf gemäß Pfeil 2 über eine Leitung 3 beheizbar ist. In dem Kocher 1 ist ein Rührwerk 4 angeordnet, welches über einen Motor 5 angetrieben wird.

Aus einem Behälter 6 wird Zuckerlösung 7 mit Hilfe einer Pumpe 8 abgezogen und über eine Leitung 9 und entsprechende Ventile in den Kocher 1 überführt. Es ist eine Rückleitung 10 für überschüssige Zuckerlösung 7 vorgesehen. Auch der Behälter 6 ist mit einem Rührwerk 11 versehen, welches über einen Motor 12 angetrieben wird. In dem Behälter 6 wird die Zuckerlösung 7 bereitgestellt, d. h. der Zucker, die Zuckeraustauschstoffe, Glucose und sonstige Bestandteile werden hier mit Wasser vorgemischt.

Der Kocher 1 ist über ein Ablaßventil 13 und die Leitung 14 mit einer Aufschlagmaschine 15 verbunden, die innerhalb eines Behälters 16 ein Schlagwerk 17 aufweist, welches über einen Motor 18 und ein Übersetzungsgetriebe 19 antreibbar ist. Der Behälter 16 ist in seinem unteren Bereich mit einem Doppelmantel 20 versehen, der zu Zwecken der Beheizung mit Dampf über eine Leitung 21 beaufschlagt werden kann.

In einem Behälter 22, der zwecks Beheizung ebenfalls doppelwandig ausgebildet sein kann, wird Aufschlagmittellösung 23 erzeugt, wobei auch hier ein Rührwerk 24 vorgesehen ist, welches über einen Motor 25 angetrieben wird. Als Aufschlagmittel können Hühnereiweiß, Gelatine oder ähnliche Stoffe in Wasser gelöst werden. Auch die Zugabe von sonstigen Zuschlagsstoffen, beispielsweise auch eine weitere Zuckerlösung, ist hier möglich. Über eine Pumpe 26 und eine beheizte Leitung 27 wird die Aufschlagmittellösung in einem Aufschlagmittelbehälter 28 überführt, in welchem eine Niveausteuersonde 29 angeordnet sein kann, die über eine elektrische Leitung 30 die Pumpe 26 steuert. Über eine Leitung 31, in der ein Ventil 32 angeordnet ist, kann die Aufschlagmittellösung 23 in die Aufschlagmaschine 15 gelangen. Für die Zugabe von Farben, Aromen und ähnlichen Stoffen ist ein weiterer Behälter 33 mit der Aufschlagmaschine 15 verbunden.

Im unteren Bereich der Aufschlagmaschine 15 bzw. des Behälters 16 ist ein Entleerungsventil 34 vorgesehen, so daß hierüber belüftete Süßwarenschaummasse 35 satzweise ausgetragen werden kann.

Es ist eine Vakuumpumpe 36, also eine Pumpe, mit der Unterdruck erzeugt werden kann, vorgesehen. Die Vakuumpumpe 36 ist über eine Leitung 37 sowie ein in dieser Leitung 37 angeordnetes Ventil 38 mit dem Kocher 1 verbunden. Eine Brüdenleitung 39 mit Absperrventil 40 führt in die Atmosphäre. Der Innenraum des Kochers 1 steht weiterhin mit einer Leitung 41, in der ein Ventil 42 angeordnet ist, in Verbindung, um über die Leitung 41 Normaldruck oder Überdruck zu Austragszwecken der gekochten Zuckerlösung 7 aus dem Kocher 1 in die Aufschlagmaschine 15 zur Einwirkung zu bringen.

Die Vakuumpumpe 36 steht über eine Leitung 43, in der ein Ventil 44 vorgesehen ist, mit dem Innenraum der Aufschlagmaschine 15 in Verbindung.

Mit der aufgezeigten Anlage kann das neue Verfahren wie folgt durchgeführt werden:
In dem Behälter 6 wird zunächst die Zuckerlösung 7 bereitgestellt, indem die Einsatzstoffe wie Zucker, Glucosesirup u. dgl. dort in Wasser gelöst und über das Rührwerk 11 umgewälzt werden. Über eine Pumpe 8 und die Leitung 9 wird die vorgesehene Menge Zuckerlösung 7 in den Innenraum des Kochers 1 überführt. Es läuft der Kochvorgang im Kocher 1 durch Dampfbeheizung gemäß Pfeil 2 ab, wobei je nach Einstellung der Ventile 44, 38 und 40 sowie gegebenenfalls Betätigung der Vakuumpumpe 36 der Kochvorgang unter Normaldruck, Überdruck oder Unterdruck abläuft. Parallel dazu wird in dem Behälter 22 Aufschlagmittellösung 23 bereitgestellt und über die Leitung 27 in den Aufschlagmittelbehälter 28 überführt. Aus diesem gelangt die entsprechende Menge Aufschlagmittellösung 23 in die Aufschlagmaschine 15, während sich die Zuckerlösung 7 immer noch in dem Kocher 1 befindet. Über die Leitung 43 und das geöffnete Ventil 44 wird nun in der Aufschlagmaschine 15 ein Unterdruck erzeugt und die Aufschlagmittellösung 23 wird unter Einwirkung dieses Unterdrucks zu einem Vorschaum aufgeschlagen. Der Unterdruck in der Aufschlagmaschine 15 kann auch vor dem Einbringen der Aufschlagmittellösung 23 bereits anliegen, so daß die Aufschlagmittellösung 23 über diesen Unterdruck eingesaugt wird.

Nachdem die Aufschlagmittellösung 23 zu dem Vorschaum aufgeschlagen ist, wird das Ventil 13 geöffnet und die gekochte Zuckerlösung 7 über die Leitung 14 dem Vorschaum in der Aufschlagmaschine 15 hinzugefügt. Dies kann beispielsweise dadurch geschehen, daß über die Leitung 41 Normaldruck oder auch Überdruck im Kocher 1 angelegt wird, so daß die gekochte Zuckermasse infolge des Druckgefälles zu dem Unterdruck in der Aufschlagmaschine 15 in diese ausgetragen wird. Es ist dabei nicht schädlich, wenn sich der Unterdruck in der Aufschlagmaschine 15 absolut gesehen erhöht. Dabei expandieren die feinen Blasen in dem Vorschaum zwar etwas. Es ist jedoch ohne Weiteres möglich, nach dem Austragen der gekochten Zuckerlösung 7 in die Aufschlagmaschine 15 das Ventil 13 zu schließen und den Unterdruck in der Aufschlagmaschine 15 wiederherzustellen oder sogar noch zu verstärken, indem ein noch geringerer Restdruck eingestellt wird. Es ist andererseits aber auch möglich, dies unter Normaldruck oder unter Überdruck ablaufen zu lassen. Wichtig ist nur, daß das Aufschlagen des Vorschaums auf jeden Fall unter Unterdruckeinwirkung geschieht. Wenn ein Überdruck in der Aufschlagmaschine 15 aufgebaut wurde, was beispielsweise über eine Leitung 45 und ein Ventil 46 erfolgen kann, ähnlich, wie dies für den Kocher über die Leitung 41 und das Ventil 42 möglich ist, kann die Uastragung der belüfteten Süßwarenschaummasse 35 direkt nach der Vermischung des Vorschaums mit der Zuckerlösung 7 erfolgen. Es ist aber auch möglich, im Anschluß an die Vermischung des Vorschaums mit der Zuckerlösung 7 eine Unterdruckbehandlung in der Aufschlagmaschine 15 anzuschließen, um den Restfeuchtigkeitsgehalt der Süßwarenschaummasse 35 zu erniedrigen, bevor die Süßwarenschaummasse 35 aus der Aufschlagmaschine 15 herausgebracht wird. In einem solchen Fall empfiehlt es sich natürlich, den Unterdruck, der beim Aufschlagen des Aufschlagmittels 23 zu dem Vorschaum angewendet wurde, zunächst weiter aufrechtzuerhalten und die Unterdruckbehandlung insoweit anzuschließen.

Es kann aber auch so gearbeitet werden, daß die Zuckerlösung 7 und die Aufschlagmittellösung 23 zusammen unter Unterdruck in der Aufschlagmaschine 15 aufgeschlagen werden. Hierzu werden die im Kocher 1 gekochte Zuckerlösung 7 sowie die Aufschlagmittellösung 23 gemeinsam in die Aufschlagmaschine 15 eingebracht. Aus dem Behälter 33 können ggf. noch Farben und Aromen hinzugefügt werden. Über das Schlagwerk 17 erfolgt dann der Aufschlagvorgang, wobei der Innenraum über die Vakuumpumpe 36 und die Leitung 43 unter Unterdruck gesetzt wurde. Die Blasen in der so erzeugten Süßwarenschaummasse 35 sind bereits relativ klein, noch bevor die Süßwarenschaummasse 35 unter den Einfluß von Normaldruck gerät. Auch bei diesem Verfahren kann sich an den Aufschlagvorgang unter Unterdruck eine weitere Unterdruckbehandlung der aufgeschlagenen Masse anschließen. Zum Zweck der Erniedrigung des Restfeuchtigkeitsgehalts erfolgt zweckmäßig eine Beheizung des Behälters 16 über den Doppelmantel 20. Die Brüden werden dabei über die Leitung 43 und die Vakuumpumpe 36 abgeführt. Nachdem diese Unterdruckbehandlung durchgeführt ist, wird zu Zwecken des Austrags über die Leitung 45 zweckmäßig ein Überdruck im Behälter 16 der Aufschlagmaschine 15 erzeugt, wodurch eine Kompression bzw. eine Kontraktion der Gasblasen erfolgt. Durch die Expansion der belüfteten Süßwarenschaummasse 35 nach Durchlauf durch das Entleerungsventils 34 vergrößern die Luftblasen ihr Volumen wiederum etwas. Da der Aufschlagvorgang jedoch unter Unterdruck erfolgte und die Gasblasen im status nascendi sehr fein und kleinvolumig waren, wird die Druckstufe zwischen dem Unterdruck bei ihrer Erzeugung und dem Normaldruck außerhalb der Anlage dazu ausgenutzt, um das Volumen der Gasblasen letztlich noch zu verkleinern und die Blasen in sehr feiner Verteilung bereitzustellen. Solche sehr kleinvolumigen Luftblasen sind beispielsweise bei einigen Kaubonbon-Typen sehr erwünscht. Bei diesem Verfahren kommt es nicht so sehr auf ein besonders niedriges spezifisches Gewicht der Süßwarenschaummasse 35 an, obwohl mit dem Verfahren auch Massen mit sehr niedrigem spezifischen Gewicht erzeugt werden können, jeweils in Abhängigkeit von dem Verhältnis der Mengen zwischen Zuckerlösung 7 und Aufschlagmittellösung 23.

### Bezugszeichenliste:

- 1 =: Kocher
- 2 =: Pfeil
- 3 =: Leitung
- 4 =: Rührwerk
- 5 =: Motor
- 6 =: Behälter
- 7 =: Zuckerlösung
- 8 =: Pumpe
- 9 =: Leitung
- 10 =: Rückleitung
- 11 =: Rührwerk
- 12 =: Motor
- 13 =: Ablaßventil
- 14 =: leitung
- 15 =: Aufschlagmaschine
- 16 =: Behälter
- 17 =: Schlagwerk
- 18 =: Motor
- 19 =: Übersetzungsgetriebe
- 20 =: Doppelmantel
- 21 =: Leitung
- 22 =: Behälter
- 23 =: Aufschlagmittellösung
- 24 =: Rührwerk
- 25 =: Motor
- 26 =: Pumpe
- 27 =: Leitung
- 28 =: Aufschlagmittelbehälter
- 29 =: Niveausteuersonde
- 30 =: elektrische Leitung
- 31 =: Leitung
- 32 =: Ventil
- 33 =: Behälter
- 34 =: Entleerungsventil
- 35 =: Süßwarenschaummasse
- 36 =: Vakuumpumpe
- 37 =: Leitung
- 38 =: Ventil
- 39 =: Brüdenleitung
- 40 =: Absperrventil
- 41 =: Leitung
- 42 =: Ventil
- 43 =: Leitung
- 44 =: Ventil
- 45 =: Leitung
- 46 =: Ventil

## Patentansprüche

1. Verfahren zur satzweisen Herstellung einer belüfteten Süßwarenschaummmasse aus einer Zuckerlösung und einer Aufschlagmittellösung und mit einem Kocher und einer Aufschlagmaschine, in dem die Zuckerlösung in dem Kocher gekocht, in die Aufschlagmaschine überführt, aus Aufschlagmittellösung und gekochter Zuckerlösung die belüftete Süßwarenschaummasse gebildet und unter Überdruckanwendung aus der Austragsmaschine herausgefördert wird, dadurch gekennzeichnet, daß die Aufschlagmittellösung (23) allein oder zusammen mit der gekochten Zuckerlösung (7) unter Unterdruck aufgeschlagen wird.

2. Verfahren nach Anspruch 1, dadurch gekennzeichnet, daß die Aufschlagmittellösung (23) unter Unterdruck zu einem Vorschaum aufgeschlagen, die gekochte Zuckerlösung (7) dem Vorschaum in der Aufschlagmaschine (15) dann hinzugefügt und Vorschaum und Zuckerlösung (7) zu der belüfteten Süßwarenschaummasse (35) vermischt werden.

3. Verfahren nach Anspruch 2, dadurch gekennzeichnet, daß die Vermischung des Vorschaums mit der gekochten Zuckerlösung (7) unter Unterdruck erfolgt und anschließend eine Unterdruckbehandlung zur Feuchtigkeitsreduzierung der belüfteten Süßwarenschaummasse (35) erfolgt.

4. Verfahren nach Anspruch 1, dadurch gekennzeichnet, daß die Aufschlagmittellösung (23) und die gekochte Zuckerlösung (7) zusammen unter Unterdruck zu der belüfteten Süßwarenschaummasse (35) aufgeschlagen werden und anschließend eine Unterdruckbehandlung zur Feuchtigkeitsreduzierung der belüfteten Süßwarenschaummasse (35) erfolgt.

5. Verfahren nach Anspruch 2 oder 4, dadurch gekennzeichnet, daß die Zuckerlösung (7) im Kocher (1) unter Unterdruck gekocht wird.

6. Verfahren nach Anspruch 2 oder 4, dadurch gekennzeichnet, daß die Unterdruckbehandlung unter Wärmezufuhr erfolgt.

7. Verfahren nach Anspruch 6, dadurch gekennzeichnet, daß die Unterdruckbehandlung auf einem anderen Druckniveau als beim Aufschlagen unter Unterdruck erfolgt.

## Claims

1. Method for the manufacture of batches of an aerated confectionary foam mass from a sugar solution and a whipping agent solution and with a cooker and a whipping machine, in which method the sugar solution is cooked in the cooker and transferred into the whipping machine and the aerated confectionary foam mass is formed out of the whipping agent solution and the cooked sugar solution and conveyed out of the discharge machine with the application of excess pressure, characterised thereby, that the whipping agent solution (23) is whipped under underpressure either on its own or together with the cooked sugar solution (7).

2. Method according to claim 1, characterised thereby, that the whipping agent solution (23) is whipped under underpressure into a preliminary foam, the cooked sugar solution (7) is then added to the preliminary foam in the whipping machine (15) and the preliminary foam and the sugar solution (7) are intermixed into the aerated confectionary foam mass (35).

3. Method according to claim 2, characterised thereby, that the intermixing of the preliminary foam with the cooked sugar solution (7) takes place under underpressure and an underpressure treatment for moisture reduction of the aerated confectionary foam mass (35) takes place subsequently.

4. Method according to claim 1, characterised thereby, that the whipping agent solution (23) and the cooked sugar solution (7) together are whipped under underpressure into the aerated confectionary foam mass (35) and an underpressure treatment for moisture reduction of the aerated confectionary foam mass (35) takes place subsequently.

5. Method according to claim 2 or 4, characterised thereby, that the sugar solution (7) is cooked under underpressure in the cooker (1).

6. Method according to claim 2 or 4, characterised thereby, that the underpressure treatment takes place with supply of heat.

7. Method according to claim 6, characterised thereby, that the underpressure treatment takes place at a pressure level differing from that for whipping under underpressure.

## Revendications

1. Procédé de fabrication par lots d'une masse mousseuse de confiserie aérée à partir d'une solution de sucre et d'une solution d'agent de fouettage, et avec un cuiseur et une machine à fouetter, dans lequel la solution de sucre est cuite dans le cuiseur, transférée dans la machine à fouetter, la masse mousseuse de confiseric aérée est formée à partir de la solution d'agent de fouettage et de la solution de sucre cuite, et est évacuée hors de la machine à fouetter en utilisant une surpression,
**caractérisé** en ce que la solution d'agent de fouettage (23) est fouettée sous dépression, seule ou ensemble avec la solution de sucre cuite (7).

2. Procédé selon la revendication 1, caractérisé en ce que la solution d'agent de fouettage (23) est fouettée sous dépression pour former une mousse préliminaire, la solution de sucre cuite (7) étant ensuite ajoutée à la mousse préliminaire dans la machine à fouetter (15), la mousse préliminaire et la solution de sucre (7) étant mélangées pour former la masse mousseuse de confiserie aérée (35).

3. Procédé selon la revendication 2, caractérisé en ce que le mélange de la mousse préliminaire avec la solution de sucre cuite (7) a lieu sous dépression, et en ce qu'un traitement sous dépression a lieu ensuite pour réduire l'humidité de la masse mousseuse de confiserie aérée (35).

4. Procédé selon la revendication 1, caractérisé en ce que la solution d'agent de fouettage (23) et la solution de sucre cuite (7) sont fouettées ensemble sous dépression pour former la masse mousseuse de confiserie aérée (35) et qu'ensuite a lieu un traitement sous dépression pour réduire l'humidité de la masse mousscuse de confiserie aérée (35).

5. Procédé selon la revendication 2 ou 4, caractérisé en ce que la solution de sucre (7) est cuite sous dépression dans le cuiseur (1).

6. Procédé selon la revendication 2 ou 4, caractérisé en ce que le traitement sous dépression a lieu avec apport de chaleur.

7. Procédé selon la revendication 6, caractérisé en ce que le traitement sous dépression a lieu à un niveau de pression autre que lors du fouettage sous dépression.
